# EUROPEAN PATENT APPLICATION

(11) **EP 4 654 504 A1**
(43) Date of publication of application: **26.11.2025**
(21) Application number: 23917784.3
(22) Date of filing: 27.12.2023
(51) Int. Cl.: H04L 1/02, H04B 7/12, H04J 13/12, H04J 13/18

(54) **COMMUNICATION DEVICE, COMMUNICATION SYSTEM, COMMUNICATION METHOD, AND COMPUTER-READABLE RECORDING MEDIUM**

(30) Priority: 19.01.2023 WO PCT/JP2023/001512
(71) Applicant: Sigcode, Inc., Tokyo 155-0031 (JP)
(72) Inventor: HAN, Chenggao, Tokyo 155-0031 (JP)
(74) Representative: Mathys & Squire
(86) International application number: PCT/JP2023/047086
(87) International publication number: WO 2024/154574

(57) **Abstract**

A communication apparatus includes: storing means for storing information indicating a first base set including a first base sequence to an N-th base sequence; shifting means for generating a first shift sequence to an N-th shift sequence by determining a shift amount based on transmission data, and cyclic shifting an n-th base sequence (n being an integer from 1 to N) by the shift amount; holding means for holding timing information indicating transmission timings of sequences; and transmitting means for transmitting each shift sequence according to the timing information, wherein the first base sequence to the N-th base sequence satisfy a first condition of: a total across the first base sequence to the N-th base sequence of correlation values of autocorrelation is not 0 when a shift amount is 0, and a total across the first base sequence to the N-th base sequence of correlation values of autocorrelation is 0 when a shift amount is different from 0 used in data transmission.

## Description

### TECHNICAL FIELD

The present disclosure relates to a communication technique.

### BACKGROUND ART

For example, an IoT (Internet of Things) device used in a smart meter or the like is disposed in various geographic locations, and one access point (AP) communicates with a plurality of IoT devices. NPL1 discloses a communication technique referred to as LoRa used in IoT devices and the like.

### CITATION LIST

### NON-PATENT LITERATURE

NPL1: SEMTECH, "AN1200.22 LoRa^{™} Modulation Basics", May 2015

### SUMMARY OF INVENTION

### TECHNICAL PROBLEM

With the communication technique described in NPL1, if there is a large number of IoT devices communicating with an AP, the number of packets able to be successfully received by the AP is restricted due to the effects of interference or the like. For example, in a case where one AP is communicating with 500 IoT devices and each IoT device transmits 1500 packets per hour, the number of packets that the AP can successfully receive per IoT device is approximately 200 packets.

Thus, there is a demand for a novel communication technique that can reduce the effects of interference or the like.

### SOLUTION TO PROBLEM

According to an aspect of the present disclosure, a communication apparatus includes: storing means for storing information indicating a first base set including a first base sequence to an N-th base sequence (N being an integer of 2 or more) which are sequences of L number of complex numbers (L being an integer of 2 or more); shifting means for generating a first shift sequence to an N-th shift sequence by determining a shift amount, based on transmission data, cyclic shifting an n-th base sequence (n being an integer from 1 to N) by the shift amount, and generating an n-th shift sequence; holding means for holding timing information indicating transmission timings of sequences; and transmitting means for transmitting the first shift sequence to the N-th shift sequence according to the timing information, wherein the first base sequence to the N-th base sequence satisfy a first condition of: a total across the first base sequence to the N-th base sequence of correlation values of autocorrelation is not 0 when a shift amount is 0, and a total across the first base sequence to the N-th base sequence of correlation values of autocorrelation is 0 when a shift amount is different from 0 used in data transmission.

Other features and advantages of the present invention will be apparent from the following description taken in conjunction with the accompanying drawings. Note that the same reference numerals denote the same or like components throughout the accompanying drawings.

The accompanying drawings, which are incorporated in and constitute a part of the specification, illustrate embodiments of the invention and, together with the description, serve to explain principles of the invention.

### BRIEF DESCRIPTION OF DRAWINGS

FIG. 1 is a configuration diagram of a wireless communication system used in describing an embodiment.
FIG. 2 is a configuration diagram of the transmitting side of a wireless device.
FIG. 3 is a diagram illustrating an example of a base set.
FIG. 4 is a diagram illustrating an example of a shift set.
FIG. 5 is a diagram illustrating a transmission example of each shift sequence.
FIG. 6 is a configuration diagram of the receiving side of an access point.
FIG. 7 is a diagram illustrating an example of each correlation value of periodic correlation.
FIG. 8 is a configuration diagram of the transmitting side of an access point.
FIG. 9 is a diagram illustrating another example of a base set.
FIG. 10 is a diagram illustrating an example of an addition set.
FIG. 11 is a configuration diagram of the receiving side of a wireless device.
FIG. 12 is a diagram illustrating of another example of each correlation value of periodic correlation.
FIG. 13 is a diagram illustrating yet another example of each correlation value of periodic correlation.
FIG. 14 is a diagram illustrating another example of a base set.
FIG. 15 is a diagram illustrating yet another example of each correlation value of periodic correlation.
FIG. 16 is a diagram illustrating an example of mapping information.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### First Embodiment

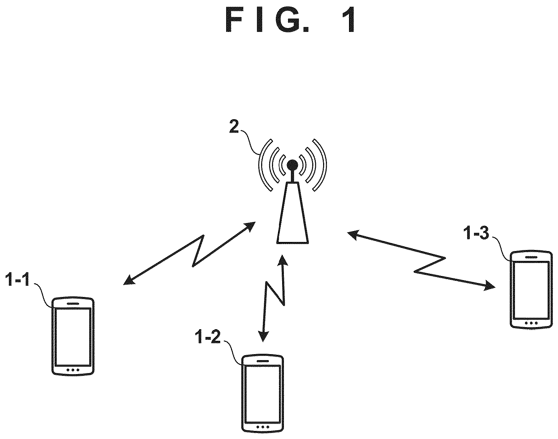

FIG. 1 is a configuration diagram of a wireless communication system used in describing an embodiment. An access point (AP) 2 is a communication apparatus that can wirelessly communicate with wireless devices (WD) 1-1 to 1-3. The WDs 1-1 to 1-3 are communication apparatuses that can communicate with the AP 2. In an example, the WDs 1-1 to 1-3 are IoT devices. Note that hereinafter, the WDs 1-1 to 1-3 are collectively referred to as the WDs 1. In the example illustrated in FIG. 1, the AP 2 communicates with three WDs 1, but the number of the WDs 1 that communicate with the AP 2 may be one or more. Hereinafter, the direction from the WDs 1 to the AP 2 will be referred to as the uplink direction and the direction from the AP 2 to the WDs 1 are the downlink direction.

### Uplink Direction Communication

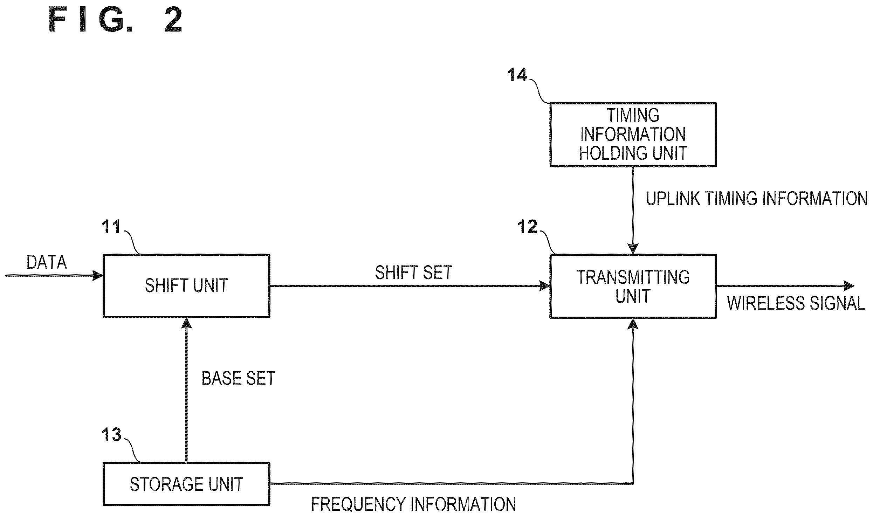

FIG. 2 is a configuration diagram of the transmitting side of the WD 1. FIG. 2 can also be considered as illustrating the configuration of a modulator provided in the WD 1. When the WD 1 initially accesses the AP 2, the WD 1 receives base set information indicating a base set including N number of base sequences and uplink timing information associated with the base set from the AP 2. Note that the initial access may be performed using any existing communication method (modulation method). A storage unit 13 stores the base set information received from the AP 2. Also, a timing information holding unit 14 holds the uplink timing information received from the AP 2. The storage unit 13 and the timing information holding unit 14 may be any volatile or non-volatile memory device.

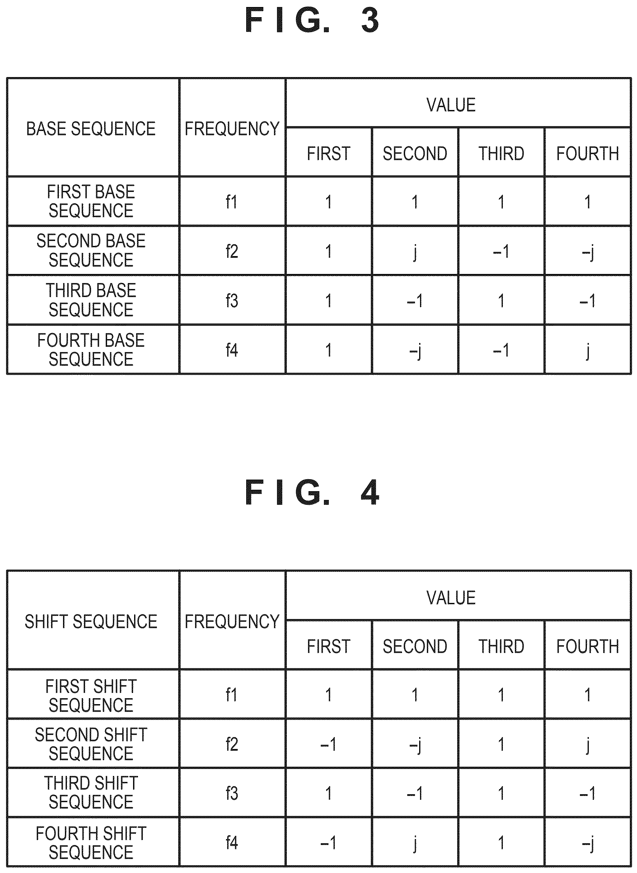

The base set include a first base sequence to an N-th base sequence, and each base sequence is a sequence of L number of complex numbers. Note that N and L are both integers of 2 or more. Conditions for the N base sequences to satisfy will be described later. In the example described below, N is 4 and L is 4. FIG. 3 illustrates an example of base sets indicated by the base set information stored in the storage unit 13. Since N is 4, the base set includes four base sequences including a first base sequence to a fourth base sequence. As illustrated in FIG. 3, the first base sequence is (1, 1, 1, 1), and the second base sequence is (1, j, -1, -j). The base set information also indicates the frequency associated with the first base sequence to the fourth base sequence. As illustrated in FIG. 3, each of the first base sequence to the fourth base sequence is associated with a frequency f1 to f4.

A shift unit 11 performs a shift operation to cyclic shift each base sequence of the base set by a shift amount determined on the basis of the transmitted data. Hereinafter, a sequence obtained via a shift operation of a base sequence is referred to as a "shift sequence". Also, a set including N (4 in the present example) shift sequences is referred to as a "shift set". The shift operation may be a left cyclic shift or a right cyclic shift. Hereinafter, the shift operation is a left cyclic shift. Also, unless it is implied or explicitly referred to as not being a left cyclic shift, "shift" means a left cyclic shift. The shift unit 11 outputs a shift set to a transmitting unit 12.

In the present example, since L is 4, the number of possible shifts (shift amount) is 4, that is 0 to 3. Thus, in a case where L is 4, two-bit data (transmission data) can be transmitted with one transmission. Note that typically, in a case where the length of each base sequence is L, the bit number that can be transmitted with one transmission is log₂L or less. In the examples described hereinafter, the shift unit 11 performs a shift operation using a value with two bits considered a binary number as the shift amount. For example, in a case where the transmission data is "10", the shift unit 11 shifts each of the first base sequence to the fourth base sequence by 2. Thus, the first shift sequence to the fourth shift sequence included in the shift set are as illustrated in FIG. 4. Note that in this example of the present embodiment, the value with the two bits considered a binary number is used as the shift amount. For example, a configuration can be used in which a discretionary correspondence relationship between the four patterns that can be represented by two bits and the four shift amounts can be predetermined, and the shift amount can be determined according to the correspondence relationship.

The uplink timing information held by the timing information holding unit 14 is information that specifies the transmission timing (transmission start timing) of each shift sequence. The transmitting unit 12 transmits each shift sequence according to the transmission timing indicated by the uplink timing information on the associated frequency. Note that a frequency associated with a shift sequence is a frequency associated with a base sequence which the shift sequence is based on. Thus, the transmitting unit 12 is configured to access base set information stored in the storage unit 13 and obtain frequency information indicating the frequency associated with each base sequence.

In the present embodiment, one complex number of each shift sequence is transmitted with one chip, and the time period of one chip is referred to as a chip period. Also, in the present example, the uplink timing information specifies the transmission timing of each shift sequence using a multiple of the chip period. Note that a maximum value T of the timing information is predetermined, and the maximum value T is 29 in the present example. The transmission timing of the shift sequence is t (t being any value from 1 to T), and this means that the shift sequence is transmitted from the start timing of the t-th chip period.

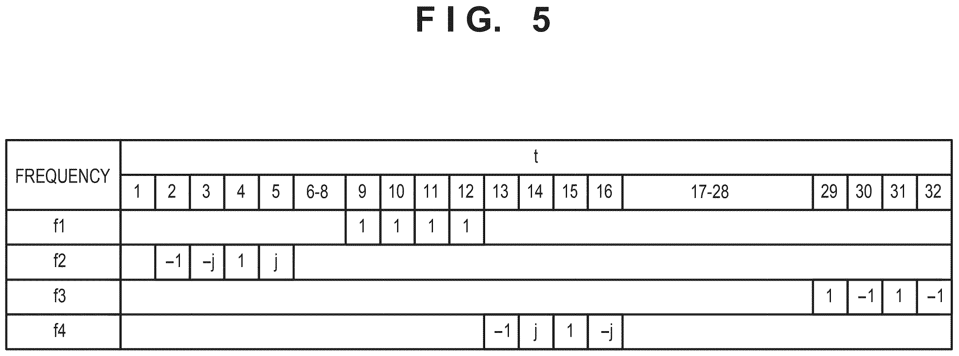

For example, the uplink timing information indicates that t equals 9, 2, 29, and 13, with these corresponding to the transmission timing of the first shift sequence, the second shift sequence, the third shift sequence, and the fourth shift sequence. In this case, as illustrated in FIG. 5, the transmitting unit 12 transmits each shift sequence on the associated frequency.

The transmitting unit 12 can transmit each complex number of the shift sequence by mapping them to the amplitude and phase of the frequency associated with the shift sequence. Now the second shift sequence transmitted on a frequency f2 illustrated in FIG. 5 will now be described as an example. To transmit the second shift sequence, when t equals 2, the transmitting unit 12 transmits a sine wave (the frequency f2) with an amplitude of a predetermined value A and a phase of 180 degrees; when t equals 3, the transmitting unit 12 transmits a sine wave (the frequency f2) with an amplitude of the predetermined value A and a phase of 270 degrees; when t equals 4, the transmitting unit 12 transmits a sine wave (the frequency f2) with an amplitude of the predetermined value A and a phase of 0 degrees; and when t equals 5, the transmitting unit 12 transmits a sine wave (the frequency f2) with an amplitude of the predetermined value A and a phase of 90 degrees.

Note that the WD 1 transmits a predetermined preamble and an identifier of the WD 1 before data is transmitted. In the present embodiment, the start timing of the first chip, that is t equals 1, is the timing of when transmission of the predetermined preamble and the identifier is completed. When the AP 2 receives the predetermined preamble and the identifier of the WD 1 from the WD 1, the AP 2 receives a signal from the WD 1 with the timing of completion of the reception set as the t = 1 start timing. In the example of FIG. 5, one transmission is completed with 32 chip periods.

The uplink timing information may be generated by the AP 2 or it may be prestored in the AP 2. In a case where the uplink timing information is generated by the AP 2, the AP 2 can generate the uplink timing information by generating the transmission timing t of each shift sequence randomly within a range of 1 to the maximum value (29 in the present example), for example. Note that the uplink timing information may be generated so that the transmission timing t of each shift sequence is different or so that there is no overlap period with the transmission of each shift sequence. Also, in a case where the AP 2 communicates with the plurality of WDs 1, the uplink timing information of each WD 1 may be generated so that the transmission timing of the signals (shift sequences) transmitted on the same frequency by each WD 1 is different. For example, the AP 2 may be configured to generate the uplink timing information separately for each WD 1. Also, in a case where the uplink timing information is prestored in the AP 2, a configuration may be used in which a plurality of different pieces of uplink timing information are stored and the uplink timing information to be used by the AP 2 in the communication with one WD 1 is selected from the plurality of pieces of uplink timing information.

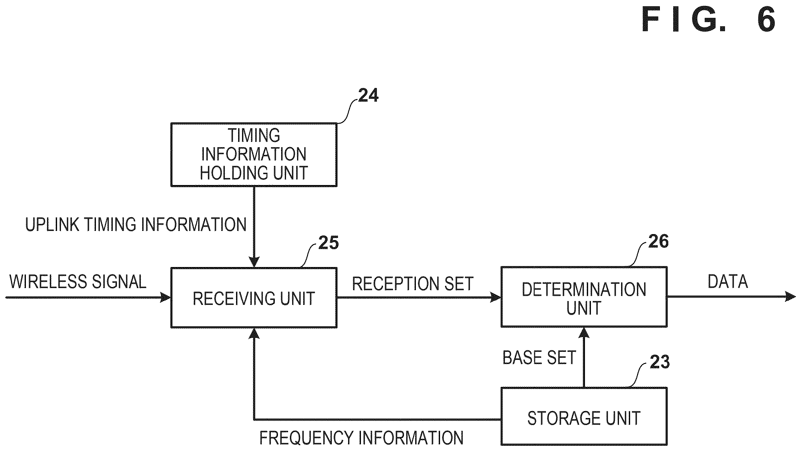

FIG. 6 illustrates the configuration of the receiving side of the AP 2. FIG. 6 can also be consider to illustrate the configuration of a demodulator provided in the AP 2. A timing information holding unit 24 is a volatile or non-volatile memory device that holds the uplink timing information reported to the WD 1. Note that in a case where the AP 2 generates the uplink timing information, the AP 2 includes a generation unit (not illustrated) that generates the uplink timing information. For example, a storage unit 23 is a volatile or non-volatile memory device that stores the base set information reported to the WD 1. When a receiving unit 25 receives the preamble and the identifier of the WD 1 from the WD 1, the receiving unit 25 receives, as a reception sequence, each shift sequence transmitted by the WD 1 according to the uplink timing information reported to the WD 1. In this manner, the uplink timing information is information indicating the timing of reception for the AP 2 of the first shift sequence to the N-th shift sequence transmitted by the WD 1 as the first reception sequence to the N-th reception sequence. Note that the receiving unit 25 obtains the frequency of each shift sequence from the base set information stored in the storage unit 23. The receiving unit 25 outputs a reception set including each received reception sequence to a determination unit 26. For example, if there is no interference, noise, or similar effects in the wireless zone and the receiving unit 25 receives each shift sequence illustrated in FIG. 4 transmitted by the WD 1 without error, the receiving unit 25 outputs each shift sequence illustrated in FIG. 4 to the determination unit 26 as the reception sequences.

The determination unit 26 determines and outputs the data received by the WD 1 on the basis of the base set indicated by the base set information stored in the storage unit 23 and the reception set. The processing in the determination unit 26 will be described below.

First, the determination unit 26 obtains a periodic correlation between the n-th base sequence and the n-th reception sequence. Here, n is an integer from 1 to N, and N equals 4 in the present example. Also, in the present example, since L equals 4, the periodic correlation includes four correlation values for each of shift amounts τ 0 to 3. Note that the correlation value when τ equals 0 in a case where the A sequence is (a0, a1, a2, a3) and the B sequence is (b0, b1, b2, b3) is a0 × b0* + a1 × b1* + a2 × b2* + a3 × b3*, and then correlation value when τ equals 1 is a0 × b1* + a1 × b2* + a2 × b3* + a3 × b0*. Here, the value b* is a complex conjugate of the value b.

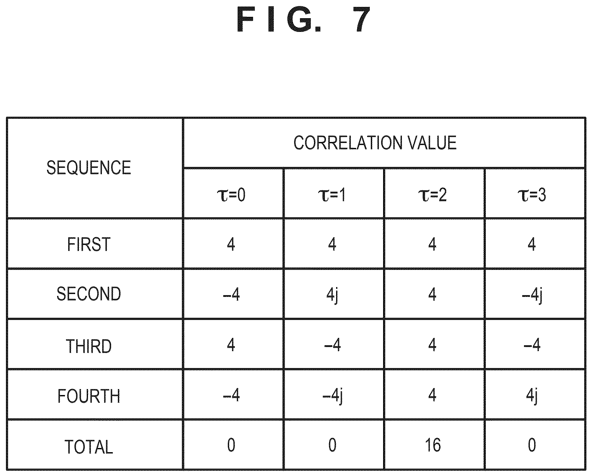

FIG. 7 illustrates each correlation value in a case where the reception set is the same as the shift set illustrated in FIG. 4. Note that "1st" in FIG. 7 represents each correlation value of the periodic correlation of the first base sequence with respect to the first reception sequence, "2nd" represents each correlation value of the periodic correlation of the second base sequence with respect to the second reception sequence, "3rd" represents each correlation value of the periodic correlation of the third base sequence with respect to the third reception sequence, and "4th" represents each correlation value of the periodic correlation of the fourth base sequence with respect to the fourth reception sequence.

The determination unit 26 obtains the total of the correlation values with the same shift amount τ in the periodic correlation obtained for each sequence. Note that "Total" in FIG. 7 represents the total of the correlation values with the same shift amount τ of each sequence. As illustrated in FIG. 7, the total of the correlation values is 16 when τ equals 2 and 0 when τ equals 0, 1, and 3. Accordingly, the determination unit 26 determines that the reception set corresponds to each base sequence of the base set being cyclic shifted to the left by τ equals 2, and thus determines that the data (reception data) transmitted by the WD 1 is "10".

Next, conditions for each base sequence included in one base set to satisfy will be described next. In the present embodiment, each base sequence included in the base set satisfies the following condition 1.
Condition 1: Autocorrelation, that is, the total across the first base sequence to the N-th base sequence of the same shift amount τ of the periodic autocorrelation of the n-th base sequence with respect to the n-th base sequence included in the base set being not 0 when the shift amount τ equals 0 and being 0 when the shift amount τ is not 0.

Note that, for example, in a case where, instead of using all of the L number (0 to (L-1)) of the shift amounts in data transmission, only Z (Z being less than L) number of shift amounts are used in data transmission (for example, a case where only 0 to (Z-1) shift amounts are used), the condition 1 is modified to the following condition 1'.
Condition 1': Autocorrelation, that is, the total across the first base sequence to the N-th base sequence of the same shift amount τ of the periodic autocorrelation of the n-th base sequence with respect to the n-th base sequence included in the base set being not 0 when the shift amount τ equals 0 and being 0 in the case of a shift amount other than 0 used in data transmission (reception).
In the following description, all of the L number of shift amounts are used in data transmission and condition 1 is used.

In this manner, by setting each base sequence of the base set, the shift amount of the shift operation on the transmitting side can be determined by the periodic correlation between the reception set and the base set on the receiving side. Specifically, the determination unit 26 can determine the shift amount with the greatest absolute value for "Total" in FIG. 7 are the shift amount in the shift operation of the WD 1 and can determine the data transmitted by the WD 1.

Note that the correlation values illustrated in FIG. 7 are obtained on the receiving side in an ideal case with no interference or the like in the wireless zone. Here, the reception sequence actually received from the WD 1 by the AP 2 will not be the same as the shift sequence due to interference, noise, and similar effects. For example, in a case where the reception situation is good for the frequencies f1 to f3 but there is interference, noise, or similar effects at the frequency f4, the error for the first shift sequence to the third shift sequence of the first reception sequence to the third reception sequence may be small but the error for the fourth shift sequence of the fourth reception sequence may be large. In this case, for example, the "Total" illustrated in FIG. 7 may not be 0 when τ equals 0, 1, and 3, and the absolute value when τ equals 2 may be a value less than 16. However, as long as the absolute value when τ equals 2 is greater than the absolute value when τ equals 0, 1, and 3, the data can be corrected determined.

In the present embodiment, since the uplink timing information of each WD 1 is set so that the transmission timings of the shift sequences transmitted on the same frequency by each WD 1 are different from one another, the probability of all of the shift sequences transmitted by a certain WD 1 being affected by interference from another WD 1 is low. Thus, even if there are a large number of WDs 1 communicating with one AP 2, the effects of interference and the like can be reduced. Furthermore, in the present embodiment, since the transmission frequencies of each shift sequence are varied, the probability of all of the shift sequences transmitted by a certain WD 1 being affected interference from another WD 1 is low.

Note that in the present embodiment, a different frequency is associated with the first base sequence to the N-th base sequence included in the base set. Then, the WDs 1 transmit each shift sequence to the AP 2 on the frequency associated with the original base sequence. However, the present embodiment is not limited to this configuration. For example, each shift sequence can be transmitted on the same frequency. Also, one or more of the first base sequence to the N-th base sequence may be associated with a first frequency, and the remaining base sequences may be associated with a second frequency different from the first frequency. In other words, a configuration can be used in which frequencies number less than N are associated with the first base sequence to the N-th base sequence. Note that regarding a plurality of shift sequences associated with the same frequency, the uplink timing information is generated so that there are no overlapping time periods in the transmission of the plurality of shift sequences. Note that even in a case where the first base sequence to the N-th base sequence are associated with different frequencies, a configuration can be used in which the uplink timing information is generated so that there are no overlapping time periods in the transmission of each shift sequence. By generating the uplink timing information in this manner, on the receiving side, conditions such as the required filter and the like can be alleviated.

### Downlink Direction Communication

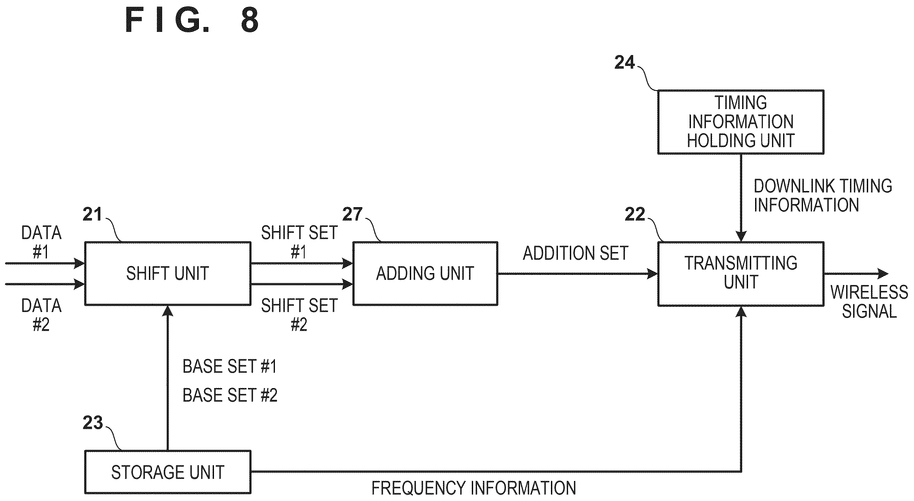

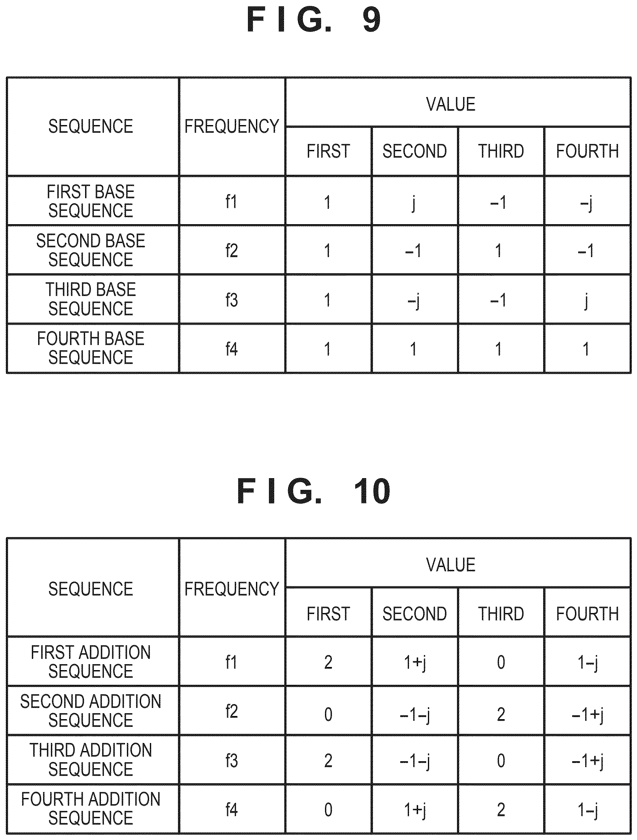

FIG. 8 is a configuration diagram of the transmitting side of AP 2. FIG. 8 can also be considered as illustrating the configuration of a modulator provided in the AP 2. In the example described below, the AP 2 communicates with two WDs 1, WD 1-1 and WD 1-2, and transmits data to each of the two WDs 1. Note that the base set information stored in the storage unit 13 of WD 1-1 indicates the base set of FIG. 3. Also, the base set information stored in the storage unit 13 of WD 1-2 indicates the base set of FIG. 9. Hereinafter, the base set illustrated in FIG. 3 used by the WD 1-1 will be referred to as base set #1, and the base set illustrated in FIG. 9 used by the WD 1-2 will be referred to as base set #2. The storage unit 23 of the AP 2 stores base set information indicating both the base set #1 and the base set #2 reported to the WD 1-1 and the WD 1-2.

Note that in the present embodiment, the base set #2 corresponds to the base set #1 with each base sequence cyclic shifted. In other words, the first base sequence of the base set #2 is the second base sequence of the base set #1, the second base sequence of the base set #2 is the third base sequence of the base set #1, the third base sequence of the base set #2 is the fourth base sequence of the base set #1, and the fourth base sequence of the base set #2 is the first base sequence of the base set #1. Note that the first base sequence to the fourth base sequence of the base set #2 is associated with the frequency f1 to the frequency f4, respectively.

A shift unit 21 performs a shift operation of each base sequence of the base set #1 with data # 1 (first transmission data) to be transmitted to the WD 1-1 and outputs a shift set #1 including the first shift sequence #1 to the fourth shift sequence #1 to an adding unit 27. The shift operation in the shift unit 21 is similar to the shift operation performed by the shift unit 11 of the WD 1. For example, in a case where bit "10" is transmitted to the WD 1-1, the shift set #1 is as in FIG. 4.

In a similar manner, the shift unit 21 performs a shift operation of each base sequence of the base set #2 with data #2 (second transmission data) to be transmitted to the WD 1-2 and outputs a shift set #2 including the first shift sequence #2 to the fourth shift sequence #2 to the adding unit 27. For example, in a case where bit "00" is transmitted to the WD 1-2, the shift set #2 is unchanged from the base set #2 illustrated in FIG. 9.

The adding unit 27 adds together the n-th shift sequence of the shift set #1 and the n-th shift sequence of the shift set #2 to generate an n-th addition sequence and outputs an addition set including the first addition sequence to the fourth addition sequence to a transmitting unit 22. FIG. 10 illustrates each addition sequence of the addition set.

The timing information holding unit 24 holds the downlink timing information. The downlink timing information is used in transmitting in the downlink direction and indicates the transmission timing (transmission start timing) of each addition sequence in a similar manner to the uplink timing information. Also, as with the uplink timing information, the downlink timing information may be generated by the AP 2 or may be pre-generated and stored in the AP 2. Note that the AP 2 reports the uplink timing information and the downlink timing information to each WDs 1. The transmitting unit 22 transmits each addition sequence according to the downlink timing information.

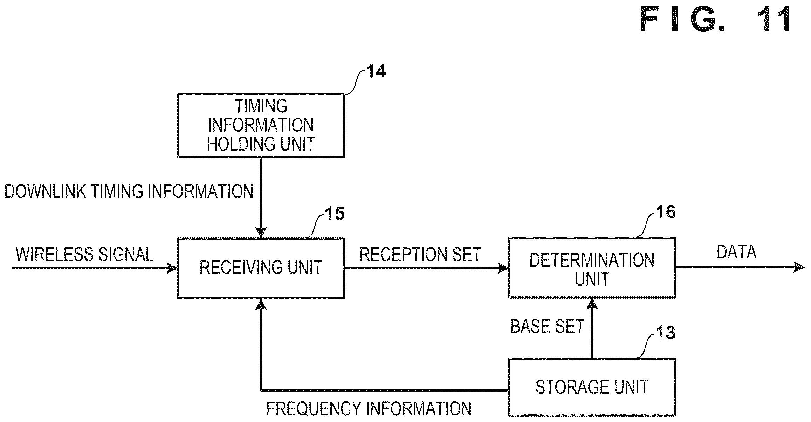

FIG. 11 illustrates the configuration of the receiving side of the WD 1. FIG. 11 can also be considered as illustrating the configuration of a demodulator provided in the WD 1. The timing information holding unit 14 holds the downlink timing information received from the AP 2. A receiving unit 15 receives each addition sequence transmitted by the AP 2 as a reception sequence according to the downlink timing information. In this manner, the downlink timing information is information indicating the timing of reception for the WD 1 of the first addition sequence to the N-th addition sequence transmitted by the AP 2 as the first reception sequence to the N-th reception sequence. The receiving unit 15 outputs the reception set including the received reception sequences to a determination unit 16. For example, if there is no interference, noise, or similar effects in the wireless zone and the receiving unit 15 receives each addition sequence illustrated in FIG. 10 transmitted by the AP 2 without error, the receiving unit 15 outputs each addition sequence illustrated in FIG. 10 to the determination unit 16 as the reception sequences.

The storage unit 13 stores the base set information indicating the base set. Note that in the case of WD 1-1, the base set information indicates the base set #1, and in the case of WD 1-2, the base set information indicates the base set #2. The processing executed by the determination unit 16 is similar to that executed by the determination unit 26.

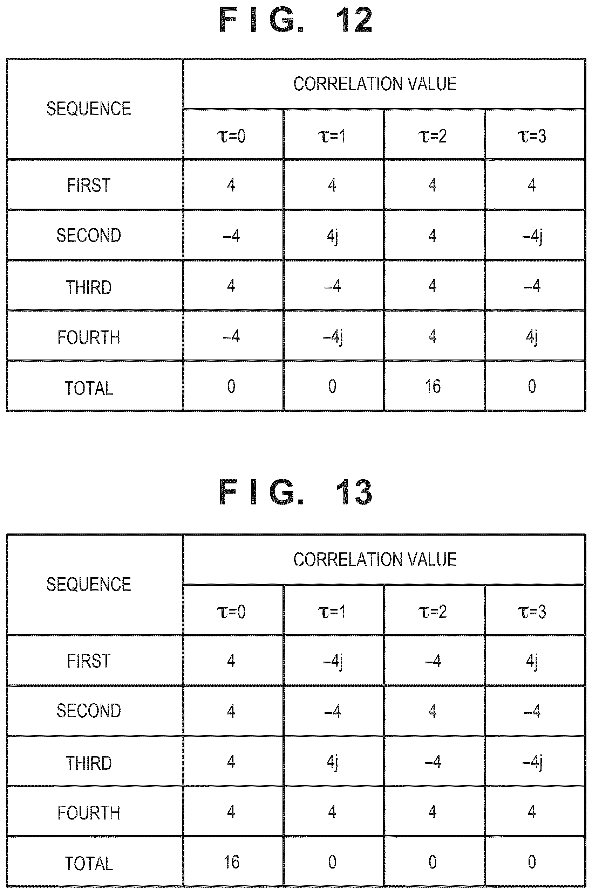

FIG. 12 illustrates the total of correlation values with the same shift amount τ of each correlation value of the periodic correlation between the n-th reception sequences of the reception set and the n-th base sequences of the base set #1 in a case where the addition set illustrated in FIG. 10 is received as a reception set without error. From the results illustrated in FIG. 12, the WD 1-1 can determine that transmission data to be "10". FIG. 13 illustrates the total of correlation values with the same shift amount τ of each correlation value of the periodic correlation between the n-th reception sequences of the reception set and the n-th base sequences of the base set #2 in a case where the addition set illustrated in FIG. 10 is received as a reception set without error. From the results illustrated in FIG. 13, the WD 1-2 can determine that transmission data to be "00". In this manner, the AP 2 can simultaneously transmit data to the WD 1-1 and the WD 1-2 using the same downlink timing information.

Next, the conditions for the base set #1 and the base set #2 to satisfy for simultaneously transmitting data to the WD 1-1 and the WD 1-2 will be described. The base set #1 and the base set #2 are each set so that the condition 1 described above is satisfied as well as the following condition 2.
Condition 2: Cross-correlation, that is, the total of the correlation values with the same shift amount τ across the first base sequence to the N-th base sequence of a periodic cross-correlation between the n-th base sequences included in the base set #1 and the n-th base sequences included in the base set #2 being 0 for all of the shift amounts τ.

Note that, for example, in a case where, instead of using all of the L number (0 to (L-1)) of the shift amounts in data transmission, only Z (Z being less than L) number of shift amounts are used in data transmission (for example, a case where only 0 to (Z-1) shift amounts are used), the condition 2 is modified to the following condition 2'.
Condition 2': Cross-correlation, that is, the total of the correlation values with the same shift amount τ across the first base sequence to the N-th base sequence of a periodic cross-correlation between the n-th base sequences included in the base set #1 and the n-th base sequences included in the base set #2 being 0 for all (Z number) of the shift amounts τ used in data transmission (reception).
In the following description, all of the L number of shift amounts are used in data transmission and condition 2 is used.

In the present embodiment, the base set #2 corresponds to the cyclic shifted base set #1. Here, the cross-correlation of the base set #1 illustrated in FIG. 3 is 0 when all of the shift amounts τ equal 0. Accordingly, it is clear that the base set #1 and the base set #2 corresponding to the cyclic shifted base set #1 satisfy the condition 2.

Note that typically, the AP 2 can communicate with M number of WDs 1 using M number of base sets (M being an integer or 2 or more). Each of the M number of base sets satisfies the condition 1 described above. Further, any two of the base sets in the M number of base sets satisfy the condition 2 described above. The M number of base sets may be generated via various methods. For example, as illustrated in FIG. 3, one base set including N number of base sequences satisfying the condition 1 and that the cross-correlations are zero for all of the shift amounts τ are set by any method. Also, by cyclic shifting the base sequences of the base set, M number (M being an integer from 2 to N) of base sets #1 to #M can be generated.

Then, the AP 2 reports the base sets #1 to #M to the M number of WDs 1. The AP 2 also reports, to each of the M number of WDs 1, individual uplink timing information and shared downlink timing information. The uplink timing information reported to each of the M number of WDs 1 may be set so that the transmission timings of the shift sequences transmitted on the same frequency by each of the M number of WDs 1 are different. Each WD 1 performs uplink direction transmission according to the reported uplink timing information using the received base set. Also, each WD 1 performs downlink direction reception according to the downlink timing information using the received base set. Also, the AP 2 receives a shift set from the WD 1 according to the uplink timing information reported to the WD 1 and determines the data from the WD 1 using the base set reported to the WD 1. Also, the AP 2 generates a shift set for each of the M number of WDs 1 using the base set reported to the M number of WDs 1, generates an addition set on the basis of the shift set for each WD 1, and transmits the addition sets according to the downlink timing information reported to the M number of WDs 1 to transmit data of each of the M number of WDs 1.

Note that individual frequencies are allocated to each base sequence of the base set even in downlink direction communication, but as described in the uplink direction communication, the same frequency can be allocated to each base sequence of the base set. Also, a configuration may be used in which the number of frequencies used is less than the number of base sequences.

Furthermore, in the present embodiment, the same frequencies f1 to f4 are used in uplink direction and downlink direction communication, but the frequency used in uplink direction communication and the frequency used in downlink direction communication may be different, meaning that frequency division duplexing (FDD) may be used. In this case, the frequencies f1 to f4 are mapped to different frequencies for the uplink direction and the downlink direction.

Note that, for example, the uplink timing information and the downlink timing information may be encrypted and reported to the WD 1. By concealing the frequency and transmission timing of each sequence from third parties, it makes it difficult for a third party to decrypt the data exchanged between the WDs 1 and the AP 2.

### Second Embodiment

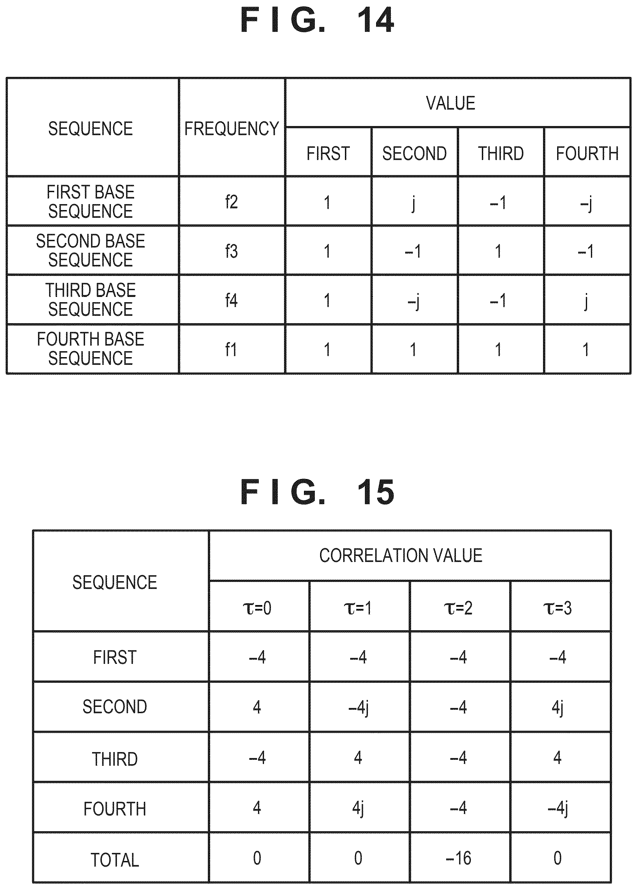

Next, a second embodiment will be described, focusing on the points that differ from the first embodiment. In the present embodiment, the downlink direction communication is different from that of the first embodiment. The configuration of the transmitting side of the AP 2 according to the present embodiment corresponds to that of FIG. 8 but without the adding unit 27. Also, in the present embodiment, the base set #2 used in communication with the WD 1-2 is as illustrated in FIG. 14. The first base sequence to the fourth base sequence of the base set #2 are similar to that illustrated in FIG. 9, but the frequencies associated with the first base sequence to the fourth base sequence are different from that illustrated in FIG. 9. In other words, in the first embodiment, the frequency associated with the n-th base sequence of the base set #1 and the frequency associated with the n-th base sequence of the base set #2 are the same. However, in the present embodiment, the frequency associated with the n-th base sequence of the base set #1 and the frequency associated with the n-th base sequence of the base set #2 are different.

Since no adding unit 27 is provided, the shift unit 21 transmits the shift set #1 and the shift set #2 to the transmitting unit 22. The transmitting unit 22 transmits each shift sequence of the shift set #1 on the associated frequency according to the downlink timing information and transmits each shift sequence of the shift set #2 on the associated frequency. Thus, for example, the first shift sequence of the shift set #1 is transmitted on the frequency f1, and the first shift sequence of the shift set #2 is transmitted on the frequency f2. Note that since the shift set #1 and the shift set #2 are transmitted according to the same downlink timing information, the n-th shift sequence of the shift set #1 and the n-th shift sequence of the shift set #2 are transmitted in the same time period.

The configuration on the receiving side of the WD 1 according to the present embodiment is the same as in FIG. 11, and the WD 1 receives each shift sequence addressed to it according to the downlink timing information. Specifically, the WD 1-1 receives the first shift sequence on the frequency f1 according to the downlink timing information. In the same time period, on the frequency f2, the first shift sequence addressed to WD 1-2 is transmitted by the AP 2, but because the frequencies are different, the WD 1-1 does not receive the first shift sequence addressed to WD 1-2. Note that even if the first shift sequence addressed to WD 1-2 is received via the filter performance of WD 1-1 or the like, no problems arise due to the condition 2 described in the first embodiment. The same applies to WD 2-2.

Also, in the present embodiment, the frequencies of the n-th base sequence of the base set #1 and the n-th base sequence of the base set #2 are different, but they may be the same. In such a case, the WD 1 receives a shift sequence addressed to another WD 1, but no problem arises due to the condition 2.

### Third Embodiment

Points that differ from the first embodiment and the second embodiment will be focused on in the following description. In the first and second embodiment, by using the M number of base sets #1 to #M, communication is performed by the AP 2 with the maximum M number of WDs 1. In the present embodiment, one AP 2 communicates with more than M number of WDs 1. In the present embodiment, each WD 1 is grouped into clusters including the maximum M number of WDs 1. Note that the number of WDs 1 included in one cluster may be 1. To each WDs 1 numbering M or less included in one cluster, a different base set among the M number of base sets is allocated. However, to the WDs 1 belonging to each different cluster, the same base set among the M number of base sets may be allocated.

Regarding uplink direction communication, the WDs 1 included in the same cluster are set with the same uplink timing information. However, among the WDs 1 included in different clusters, different uplink timing information is set. In other words, among the WDs 1 included in different clusters, the uplink timing information is set so that the transmission timings of the signals transmitted on the same frequency in the uplink direction are different from one another. The maximum M number of WDs 1 included in the same cluster transmit each shift sequence at the same timing, but due to the condition 1 and the condition 2 described above, the AP 2 can demodulate the signals from the maximum M number of WDs 1 included in the same cluster. Also, among the WDs 1 included in different clusters, signals of the same frequency are transmitted at different timings. This can suppress the interference from becoming too great.

Note that downlink direction communication to the maximum M number of WDs 1 included in the same cluster is similar to that in the first and second embodiment. However, the WDs 1 included in different clusters are set with downlink timing information so that the transmission timings of the signals transmitted on the same frequency in the downlink direction are different from one another. In other words, different clusters are set with different downlink timing information. This can suppress the interference from becoming too greater in the downlink signals among the WDs 1 included in different clusters.

### Fourth Embodiment

In each embodiment described above, one base set among the M number of base sets is allocated to one WD 1. In the present embodiment, two or more different base sets among the M number of base sets are allocated to one WD 1. In the following description according to the present embodiment, unless it is clear from the context that it is not the case or unless it is clearly stated, the WD 1 allocated with two or more base sets will be simply referred to as "WD 1". The WD 1 is allocated with the uplink timing information associated with each base set. For example, in a case where one WD 1 is allocated with two base sets, a first base set and a second base set, the WD 1 is set with first uplink timing information associated with the first base set and second uplink timing information associated with the second base set. For example, in the example of FIG. 5, two-bit data is transmitted in a 32 chip period. However, by allocating two base sets to the WD 1, the WD 1 can transmit 4-bit data in a 32 chip period.

The plurality of pieces of uplink timing information corresponding to the different base sets allocated to the WD 1 may be the same. Even if the plurality of pieces of uplink timing information corresponding to the different base sets are the same, due to the condition 1 and the condition 2 described above, the AP 2 can demodulate the data from the WD 1. Alternatively, the plurality of pieces of uplink timing information corresponding to the different base sets may be set so that the transmission timings of the shift sequences of the different base sets transmitted on the same frequency are different from one another. For example, the plurality of pieces of uplink timing information corresponding to the different base sets may be set so that the shift sequences of the different base sets transmitted on the same frequency are not transmitted overlapping in time.

Note that allocating the different base sets and the uplink timing information associated with the plurality of base sets to one WD 1 corresponds to performing communication in the uplink direction similar to the communication in the downlink direction described in the second embodiment. The difference from the second embodiment is that, in the second embodiment, the AP 2 transmits data to the different WDs 1 using each base set, whereas here, the WD 1 allocated with the plurality of base sets transmits data to the same AP 2 using each base set. Also, in the communication in the downlink direction described in the second embodiment, the same downlink timing information is associated with each base set. However here, in the communication in the uplink direction by the WD 1 allocated with the plurality of base sets, as described above, a plurality of different pieces of uplink timing information associated with the plurality of base sets are allocated.

Regarding data reception, the AP 2 according to the second embodiment receives the reception sequences based on the different base sets reported to the plurality of WDs 1 according to the uplink timing information reported to the plurality of WDs 1 from each of the WDs 1. Note that the uplink timing information reported to each WD 1 is set so that the reception timings (reception start timing) of the reception sequences received on the same frequency from each WD 1 are different from one another. Also, the AP 2 according to the third embodiment receives the reception sequences based on the different base sets according to the same uplink timing information from the different WDs 1 of the same cluster.

The AP 2 according to the present embodiment receives the reception sequences based on the different base sets according to the same uplink timing information from the same WD 1. Alternatively, the AP 2 according to the present embodiment receives the reception sequences based on the different base sets according to different uplink timing information from the same WD 1. The different uplink timing information is set so that the reception timings of the reception sequences received on the same frequency among the reception sequences received from the same WD 1 are different from one another. For example, the different uplink timing information may be set so that the reception period of the different reception sequences on the same frequency from the same WD 1 do not overlap in time. Note that the WD 1 according to the present embodiment receives the reception sequences based on the different base sets according to the same downlink timing information from the same AP 2. Alternatively, the WD 1 according to the present embodiment receives the reception sequences based on the different base sets according to different downlink timing information from the same AP 2. The different downlink timing information is set so that the reception timings of the reception sequences received on the same frequency among the reception sequences received from the same AP 2 are different from one another. For example, the different downlink timing information may be set so that the reception period of the different reception sequences on the same frequency do not overlap in time.

Note that in a case where the same WD 1 is allocated with the plurality of base sets, as with the communication in the downlink direction according to the first embodiment, the WD 1 can transmit an addition sequence obtained by adding together the shift sequences based on each base set to the AP 2. In such a case, the uplink timing information indicates the transmission timing of the addition sequences.

### Fifth Embodiment

Next, the fifth embodiment will be described, focusing on the points that differ from the embodiments described above. In the embodiments described above, the length of each base sequence of the base set is set to L, and with a single communication, data of log₂L bits or less is transmitted to one communication partner communication apparatus. In the present embodiment, the length of each base sequence of the base set is still set to L, but with a single communication, the bit number that can be transmitted to one communication apparatus is greater than log₂L bits.

This embodiment will be described below using an example in which the WD 1 transmits 3-bit data of "110" and "010" to the AP 2 with a single communication. Note that the base set used by the WD 1 is as illustrated in FIG. 3. The shift unit 11 of the WD 1 converts the base sequences into intermediate sequences by multiplying a value corresponding to the first bit of the 3 bits by the complex number of each base sequence of the base set. Hereinafter, for example, if the first bit is "1", it is multiplied by 1, and if the first bit is "0", it is multiplied by -1. Next, the shift unit 11 determines the shift amount by taking the last 2 bits in the 3 bits as a binary number, generates each shift sequence by shifting each intermediate sequence by the shift amount, and transmit the shift set including each shift sequence to the transmitting unit 12.

In the case of data "110", the first bit is "1". Thus, each intermediate sequence is the same as the base sequence. Accordingly, the shift unit 11 is the intermediate sequence (base sequence) shifted by 2 on the basis of the last 2 bits "10". Thus, the shift set output to the transmitting unit 12 is as illustrated in FIG. 4. On the other hand, in the case of data "010", the first bit is "0". Thus, the shift unit 11 inverts the sign of each base sequence and performs a shift operation using a shift amount of 2. Accordingly, the shift set output to the transmitting unit 12 corresponds to the shift set of FIG. 4 with the signs of each shift sequence inverted. Note that in the present example, each base sequence of the base set is multiplied by a multiplier corresponding to a bit before a shift operation is performed. However, it does not matter if multiplying by a multiplier corresponding to a bit is performed after the shift operation.

The reception configuration of the AP 2 according to the present embodiment is similar to that of the first embodiment. Thus, in a case where the WD 1 transmits the data "110", the AP 2 obtains the correlation values illustrated in FIG. 7. On the other hand, in a case where the WD 1 transmits the data "010", the AP 2 obtains the correlation values illustrated in FIG. 15. The determination unit 26 determines the last 2 bits on the basis of the value for the shift amount τ which gives the largest absolute value for the total of correlation values. Also, the determination unit 26 can determine whether the first bit is a "0" or a "1" on the basis of the sign of the shift amount τ which gives the largest absolute value. Note that in the present example, if the first bit is "0", -1 is used in the multiplication. However, for example, in the case of "2", the total value when τ equals 2 as in FIG. 15 is 32. Thus, specifically, the determination unit 26 determines whether the first bit is a "0" or a "1" on the basis of the total value of the shift amount τ which gives the largest absolute value.

Note that in the example described above, the WD 1 transmits 3-bit data to the AP 2. However, in the case of transmitting 4-bit data, for example, "1 + j", "-1 + j", "-1 - j", and "1 - j" can be used as the multiplier according to the value of the first 2 bits. In other words, the multiplier may be a complex number. In such a case, the determination unit 26 determines the multiplier on the basis of the total value (complex number) for the shift amount τ which gives the largest absolute value and determines the bit corresponding to the multiplier. Note that the absolute value of the complex number corresponds to the distance from the origin in a complex plane.

To summarize, in the first embodiment, the shift amount is determined on the basis of the P-bit data (P being an integer of 1 or more), and the P-bit data is transmitted with a single communication. Note that P is an integer of log₂L or less. On the other hand, in the present embodiment, (P + Q)-bit (Q being an integer of 1 or more) data is transmitted with a single communication. The shift unit 11 determines the shift amount on the basis of the P-bit data in the (P + Q)-bit data. Also, the shift unit 11 determines the multiplier for multiplication with each complex number of each base sequence on the basis of the Q-bit data in the (P + Q)-bit data. Note that the multiplier number is 2^{Q}. Then, the shift unit 11 multiplies each base sequence by the multiplier and performs the shift operation to generate each shift sequence. Note that the Q bits used in determining the multiplier and the P bits for determining the shift amount may be selected in any manner from among the bits from the 1st to the (P + Q) bit forming the (P + Q) bits, and the configuration is not limited to determining the multiplier using the first Q bit.

On the other hand, the determination unit 26 of the AP 2 obtains, for each reception sequence, the periodic correlation with the base sequence corresponding to the reception sequence and the total of the correlation values with the same shift amount. As in the first embodiment, the P-bit data is determined on the basis of the shift amount with the largest total absolute value by the determination unit 26. Also, the determination unit 26 determines the multiplier on the basis of the total value of the shift amount with the largest absolute value and determines the Q-bit data on the basis of the determined multiplier. According to this configuration, the data amount transmitted in a single communication is greater than that of the first embodiment. Note that the communication method according to the present embodiment may be applied not only to the uplink direction but also to the downlink direction. Also, this configuration can be applied to the second to fourth embodiment.

### Sixth Embodiment

Next, the sixth embodiment will be described, focusing on the points that differ from the embodiments described above. The present embodiment also, as with the fifth embodiment, increases the data amount transmitted with a single communication. Take an example in which the length L (sequence length) of each base sequence of the base set is set to 5. In the first embodiment, even if L is 5, the bits that can be transmitted with a single communication is 2 bits.

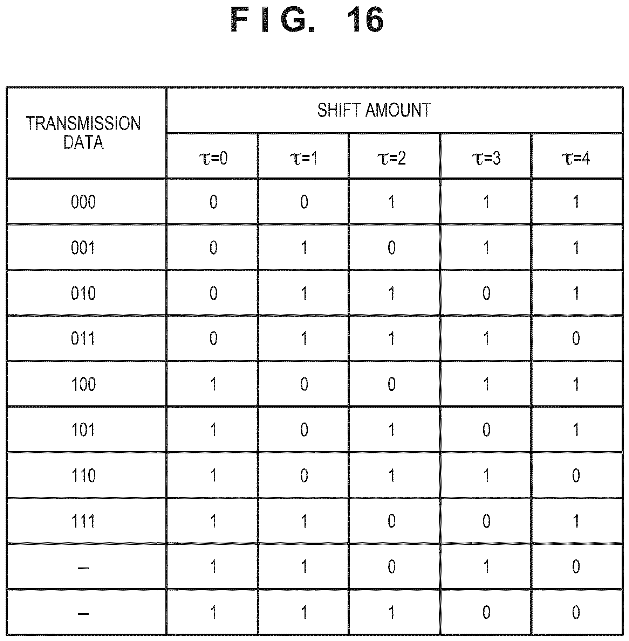

In the present embodiment, consider for example, a combination of three selected from five shift amounts τ from 0 to 4. FIG. 16 illustrates ten combinations obtained by selecting three from five shift amounts τ. Note that "1" in FIG. 16 indicates that it is selected in the combination. In the present embodiment, each of the eight patterns represented by 3-bit data is mapped to one of the ten combinations as illustrated in FIG. 16. In FIG. 16, for example, "000" corresponds to the combination of the shift amounts τ equaling 2, 3, and 4.

In a case where the transmission data is "000", according to the mapping indicated by the mapping information of FIG. 16, the shift unit 11 generates the shift set #1 by shifting each base sequence by the shift amount τ = 2, generates the shift set #2 by shifting each base sequence by the shift amount τ = 3, and generates the shift set #3 by shifting each base sequence by the shift amount τ = 4. Then, by adding together the n-th shift sequence of the shift set #1 to the shift set #3, a shift set to be transmitted to the transmitting unit 12 is generated. As in the first embodiment, the transmitting unit 12 transmits each shift sequence according to the uplink timing information. Note that the mapping information is pre-generated and stored in the storage unit 13. Alternatively, the mapping information is received from the AP 2 together with the uplink timing information and the like.

The storage unit 23 of the AP 2 also stores the mapping information illustrated in FIG. 16. The determination unit 26, using the processing described in the first embodiment, obtains the periodic correlation between the reception sequences and the corresponding base sequences and obtains the total correlation values with the same shift amount for each sequence. Then, the determination unit 26 determines the shift amounts with the three highest absolute values for the total. As made clear in the description of FIGS. 12 and 13, in a case where the reception sequence and the shift sequence are the same, the totals when the shift amounts τ equals 2, 3, and 4 are the same total and are larger than the total when the shift amounts τ equal 0 and 1. Thus, the determination unit 26 can determine the transmission data of the WD 1 as "000" according to the mapping information illustrated in FIG. 16.

To summarize, in the present embodiment, the WD 1 and the AP 2 include the same mapping information. The mapping information indicates the relationship between the combination of a predetermined number of shift amounts and the P-bit data. Note that the number of combinations is 2^{P} or greater. Also, the predetermined number is 2 or more and less than L (in the example of FIG. 16, the predetermined number is 3). In the case of transmitting the P-bit data, the WD 1 references the mapping information on the basis of the data and determines the predetermined number of shift amounts. Then, the WD 1 generates a shift set corresponding to each shift amount via a shift operation using each shift amount and adds together the shift sets corresponding to each shift amount to generate a shift set to transmit to the transmitting unit 12. On the other hand, the AP 2 determines the predetermined number of shift amounts via the periodic correlation between the reception sets and the base sets. Then, the AP 2 references the mapping information on the basis of the determined predetermined number of shift amounts and determines the data transmitted by the WD 1.

Note that the present embodiment can be combined with the configurations described in the embodiments described above. The present embodiment can also be applied to downlink direction communication.

### Other

In the embodiments described above, a configuration can be used in which a cyclic prefix (CP) is added to each shift sequence of the shift set transmitted by the WD 1, that is, a CP is transmitted to the shift set directly before or after the shift set. For example, the CP is the last C of the shift sequence (C being an integer of L or less), and in this case, the WD 1 transmits the CP directly before the shift sequence. In other words, the WD 1 add the CP directly before the shift sequence to generate and transmit a CP-attached shift sequence. For example, if C equals 2, the CP-attached shift sequence obtained by adding CP to the second shift sequence of FIG. 4 corresponds to 1, j, -1, -j, 1, j. In another example, the CP is the first C of the shift sequence, and in this case, the WD 1 transmits the CP directly after the shift sequence. In other words, the WD 1 add the CP directly after the shift sequence to generate and transmit a CP-attached shift sequence. The same applies to the downlink direction. By adding the CP, the information can be accurately demodulated in a multipath environment.

Also, in the embodiments described above, the WD 1 receives the base set from the AP 2. However, a configuration may be used in which the base set information indicating the base set is prestored in the WD 1. In such a case, the storage unit 13 may not be a rewritable memory device and may instead be a device that holds the base set information via hardware. The same applies to the storage unit 23 of the AP 2.

Also, in the embodiments described above, the WDs 1 and the AP 2 wirelessly communicate. However, the present invention can be applied to not only communication via wireless signals of the radio frequency band but also to communications using sound waves, communication using light, and the like. Also, the communication method and communication system described above in the embodiments are provided.

A computer program that causes an apparatus including one or more processors to function as the WDs 1 and the AP 2 described above in the embodiments is provided. The computer program is stored in one or more memory devices of the apparatus and includes one or more program instructions that cause the apparatus to function as the WDs 1 and the AP 2 described above in the embodiment when the computer program is executed by the one or more processors of the apparatus. Also, a computer program that causes the communication method performed by the WDs 1 and the AP 2 described above in the embodiments to be executed by the apparatus including one or more processors is provided. Furthermore, a non-transitory computer-readable storage medium storing the computer program is provided.

The invention is not limited to the foregoing embodiments, and various variations/changes are possible within the spirit of the invention.

## Claims

1. A communication apparatus comprising:
storing means for storing information indicating a first base set including a first base sequence to an N-th base sequence (N being an integer of 2 or more) which are sequences of L number of complex numbers (L being an integer of 2 or more);
shifting means for generating a first shift sequence to an N-th shift sequence by determining a shift amount based on transmission data, cyclic shifting an n-th base sequence (n being an integer from 1 to N) by the shift amount, and generating an n-th shift sequence;
holding means for holding timing information indicating transmission timings of sequences; and
transmitting means for transmitting the first shift sequence to the N-th shift sequence according to the timing information, wherein
the first base sequence to the N-th base sequence satisfy a first condition of:
a total across the first base sequence to the N-th base sequence of correlation values of autocorrelation is not 0 when a shift amount is 0, and
a total across the first base sequence to the N-th base sequence of correlation values of autocorrelation is 0 when a shift amount is different from 0 used in data transmission.

2. The communication apparatus according to claim 1, wherein
the transmission timings of each of the first shift sequence to the N-th shift sequence are different from one another.

3. The communication apparatus according to claim 1 or 2, wherein
each of the first shift sequence to the N-th shift sequence is associated with a frequency, and
the transmitting means transmits each of the first shift sequence to the N-th shift sequence on frequencies associated therewith.

4. The communication apparatus according to claim 3, wherein
the frequencies associated with each of the first shift sequence to the N-th shift sequence are different from one another.

5. The communication apparatus according to claim 3, wherein
frequencies associated with at least two shift sequences among the first shift sequence to the N-th shift sequence are same, and
the transmission timings of the at least two shift sequences indicated by the timing information are set so that transmissions of the at least two shift sequences do not have an overlapping period.

6. The communication apparatus according to any one of claims 1 to 5, wherein
the transmission data is data of P bits,
the shifting means determines the shift amount based on the data of P bits, and
a value of P is log₂L or less.

7. The communication apparatus according to any one of claims 1 to 5, wherein
the transmission data is data of (P + Q) bits,
the shifting means determines the shift amount based on data of P bits in the (P + Q) bits, and determines a multiplier based on data of Q bits in the (P + Q) bits,
the n-th shift sequence is obtained by multiplying the L number of complex numbers of the n-th base sequence by the multiplier, and cyclic shifting by the shift amount, and
a value of P is log₂L or less.

8. The communication apparatus according to any one of claims 1 to 5, wherein
the shifting means determines a predetermined number of different shift amounts based on the transmission data,
the shifting means generates, by cyclic shifting the n-th base sequence by the predetermined number of different shift amounts, the n-th shift sequence for each of the predetermined number of different shift amounts, and generates the first shift sequence to the N-th shift sequence by adding together the n-th shift sequences generated for each of the predetermined number of different shift amounts, and
the predetermined number is a value of 2 or greater and less than L.

9. The communication apparatus according to any one of claims 1 to 8, wherein
the timing information held by the holding means is received from an apparatus which is a transmission destination of the transmission data.

10. The communication apparatus according to any one of claims 1 to 9, wherein
the first base sequence to the N-th base sequence stored by the storing means are received from an apparatus which is a transmission destination of the transmission data.

11. The communication apparatus according to any one of claims 1 to 10, wherein
the transmitting means transmits a cyclic prefix that is based on the n-th shift sequence directly before or directly after the n-th shift sequence.

12. The communication apparatus according to any one of claims 1 to 8, wherein
the storing means further stores information indicating a second base set including a first base sequence to an N-th base sequence which are sequences of the L number of complex numbers, with the first base sequence to the N-th base sequence of the second base set satisfying the first condition,
the holding means holds first timing information associated with the first base set and second timing information associated with the second base set,
in a case where first transmission data and second transmission data are transmitted to a same apparatus,
the shifting means generates a first shift set including the first shift sequence to the N-th shift sequence by cyclic shifting the n-th base sequence of the first base set by a first shift amount that is based on the first transmission data and generates a second shift set including the first shift sequence to the N-th shift sequence by cyclic shifting the n-th base sequence of the second base set by a second shift amount that is based on the second transmission data,
the transmitting means transmits the first shift sequence to the N-th shift sequence of the first shift set according to the first timing information and transmits the first shift sequence to the N-th shift sequence of the second shift set according to the second timing information, and
the first base set and the second base set satisfy a second condition of:
a total of correlation values with same shift amount across the first base sequence to the N-th base sequence of periodic correlation between the n-th base sequence of the first base set and the n-th base sequence of the second base set is 0 for all shift amounts used in data transmission.

13. The communication apparatus according to claim 12, wherein
the first timing information and the second timing information are set so that the transmission timings of shift sequences transmitted on a same frequency of the first shift set and the second shift set are different from one another.

14. The communication apparatus according to claim 12, wherein
the first timing information and the second timing information are same information.

15. The communication apparatus according to any one of claims 1 to 8, wherein
the storing means further stores information indicating a second base set including a first base sequence to an N-th base sequence which are sequences of the L number of complex numbers, with the first base sequence to the N-th base sequence of the second base set satisfying the first condition,
in a case where first transmission data is transmitted to a first communication apparatus and second transmission data is transmitted to a second communication apparatus different from the first communication apparatus,
the shifting means generates a first shift set including the first shift sequence to the N-th shift sequence by cyclic shifting the n-th base sequence of the first base set by a first shift amount that is based on the first transmission data and generates a second shift set including the first shift sequence to the N-th shift sequence by cyclic shifting the n-th base sequence of the second base set by a second shift amount that is based on the second transmission data,
the transmitting means generates an n-th addition sequence by adding together the n-th shift sequence of the first shift set and the n-th shift sequence of the second shift set and transmits a first addition sequence to an N-th addition sequence according to the timing information, and
the first base set and the second base set satisfy a second condition of:
a total of correlation values with same shift amount across the first base sequence to the N-th base sequence of periodic correlation between the n-th base sequence of the first base set and the n-th base sequence of the second base set is 0 for all shift amounts used in data transmission.

16. The communication apparatus according to any one of claims 1 to 8, wherein
the storing means further stores information indicating a second base set including a first base sequence to an N-th base sequence which are sequences of the L number of complex numbers, with the first base sequence to the N-th base sequence of the second base set satisfying the first condition,
in a case where first transmission data is transmitted to a first communication apparatus and second transmission data is transmitted to a second communication apparatus different from the first communication apparatus,
the shifting means generates a first shift set including the first shift sequence to the N-th shift sequence by cyclic shifting the n-th base sequence of the first base set by a first shift amount that is based on the first transmission data and generates a second shift set including the first shift sequence to the N-th shift sequence by cyclic shifting the n-th base sequence of the second base set by a second shift amount that is based on the second transmission data,
the transmitting means transmits the first shift sequence to the N-th shift sequence of the first shift set and the first shift sequence to the N-th shift sequence of the second shift set according to same timing information, and
the first base set and the second base set satisfy a second condition of:
a total of correlation values with same shift amount across the first base sequence to the N-th base sequence of periodic correlation between the n-th base sequence of the first base set and the n-th base sequence of the second base set is 0 for all shift amounts used in data transmission.

17. The communication apparatus according to any one of claims 1 to 8, further comprising:
generating means for generating the timing information.

18. A communication apparatus comprising:
storing means for storing information indicating a first base set including a first base sequence to an N-th base sequence (N being an integer of 2 or more) which are sequences of L number of complex numbers (L being an integer of 2 or more);
holding means for holding timing information indicating reception timings of sequences;
receiving means for receiving a first reception sequence to an N-th reception sequence according to the timing information; and
determining means for determining reception data, based on a total value obtained by obtaining a periodic correlation between an n-th reception sequence (n being an integer from 1 to N) and an n-th base sequence, and totaling correlation values with same shift amount of the obtained periodic correlation for the first reception sequence to the N-th reception sequence, wherein
the first base sequence to the N-th base sequence satisfy a first condition of:
a total across the first base sequence to the N-th base sequence of correlation values of autocorrelation is not 0 when a shift amount is 0, and
a total across the first base sequence to the N-th base sequence of correlation values of autocorrelation is 0 when a shift amount is different from 0 used in data reception.

19. The communication apparatus according to claim 18, wherein
the reception timings of each of the first reception sequence to the N-th reception sequence are different from one another.

20. The communication apparatus according to claim 18 or 19, wherein
each of the first reception sequence to the N-th reception sequence is associated with a frequency, and
the receiving means receives each of the first reception sequence to the N-th reception sequence on frequencies associated therewith.

21. The communication apparatus according to claim 20, wherein
the frequencies associated with each of the first reception sequence to the N-th reception sequence are different from one another.

22. The communication apparatus according to claim 20, wherein
frequencies associated with at least two reception sequences among the first reception sequence to the N-th reception sequence are same, and
the reception timings of the at least two reception sequences are set so that receptions of the at least two reception sequences do not have an overlapping period.

23. The communication apparatus according to any one of claims 18 to 22, wherein
the determining means determines the reception data, based on a shift amount with a largest absolute value for the total value.

24. The communication apparatus according to any one of claims 18 to 22, wherein
the determining means determines the reception data, based on a shift amount with a largest absolute value for the total value and the total value with the largest absolute value.

25. The communication apparatus according to any one of claims 18 to 22, wherein
the determining means determines a predetermined number of shift amounts based on an absolute value of the total value, and determines the reception data based on the predetermined number of shift amounts.

26. The communication apparatus according to any one of claims 18 to 25, wherein
the storing means further stores information indicating a second base set including a first base sequence to an N-th base sequence which are sequences of the L number of complex numbers, with the first base sequence to the N-th base sequence of the second base set satisfying the first condition,
the holding means holds first timing information associated with the first base set and second timing information associated with the second base set,
the determining means obtains a first periodic correlation between the n-th reception sequence received by the receiving means according to the first timing information and the n-th base sequence of the first base set and determines first reception data based on a total value obtained by totaling correlation values with same shift amount of the first periodic correlation obtained for the first reception sequence to the N-th reception sequence, and obtains a second periodic correlation between the n-th reception sequence received by the receiving means according to the second timing information and the n-th base sequence of the second base set and determines second reception data based on a total value obtained by totaling correlation values with same shift amount of the second periodic correlation obtained for the first reception sequence to the N-th reception sequence, and
the first base set and the second base set satisfy a second condition of:
a total of correlation values with same shift amount across the first base sequence to the N-th base sequence of periodic correlation between the n-th base sequence of the first base set and the n-th base sequence of the second base set is 0 for all shift amounts used in data reception.

27. The communication apparatus according to claim 26, wherein
the first reception data and the second reception data are data from different apparatuses, and
the first timing information and the second timing information are same information.

28. The communication apparatus according to claim 26, wherein
the first reception data and the second reception data are data from a same apparatus, and
the first timing information and the second timing information are same information.

29. The communication apparatus according to claim 26, wherein
the first reception data and the second reception data are data from different apparatuses, and
the first timing information and the second timing information are set so that the reception timings of reception sequences received on a same frequency are different from one another.

30. The communication apparatus according to claim 26, wherein
the first reception data and the second reception data are data from a same apparatus, and
the first timing information and the second timing information are set so that the reception timings of reception sequences received on a same frequency are different from one another.

31. A computer-readable storage medium storing a computer program, when executed by one or more processors of an apparatus, causes the apparatus to function as the communication apparatus according to any one of claims 1 to 30.

32. A communication method for a communication apparatus comprising:
determining a shift amount based on transmission data;
generating a first shift sequence to an N-th shift sequence by cyclic shifting a first base sequence to an N-th base sequence (N being an integer of 2 or more) which are sequences of an L number (L being an integer of 2 or more) of complex numbers by the shift amount; and
transmitting the first shift sequence to the N-th shift sequence according to timing information indicating transmission timings of sequences, wherein
the first base sequence to the N-th base sequence satisfy a first condition of:
a total across the first base sequence to the N-th base sequence of correlation values of autocorrelation is not 0 when a shift amount is 0, and
a total across the first base sequence to the N-th base sequence of correlation values of autocorrelation is 0 when a shift amount is different from 0 used in data transmission.

33. A communication method for a communication apparatus comprising:
receiving a first reception sequence to an N-th reception sequence corresponding to a first base sequence to an N-th base sequence (N being an integer of 2 or more) which are sequences of L number (L being an integer of 2 or more) complex numbers according to timing information indicating reception timings of the first reception sequence to the N-th reception sequence; and
determining reception data based on a total value obtained by obtaining a periodic correlation between an n-th reception sequence (n being an integer from 1 to N) and an n-th base sequence and totaling correlation values with same shift amount of the obtained periodic correlation for the first reception sequence to the N-th reception sequence, wherein
the first base sequence to the N-th base sequence satisfy a first condition of:
a total across the first base sequence to the N-th base sequence of correlation values of autocorrelation is not 0 when a shift amount is 0, and
a total across the first base sequence to the N-th base sequence of correlation values of autocorrelation is 0 when a shift amount is different from 0 used in data reception.

34. A communication system comprising:
an access point; and
at least two communication apparatuses, wherein
each of the at least two communication apparatuses include:
storing means for storing information indicating a base set including a first base sequence to an N-th base sequence (N being an integer of 2 or more) which are sequences of L number (L being an integer of 2 or more) of complex numbers,
shifting means for generating a first shift sequence to an N-th shift sequence by determining a shift amount based on data transmitted to the access point, cyclic shifting an n-th base sequence (n being an integer from 1 to N) by the shift amount, and generating an n-th shift sequence,
holding means for holding timing information indicating transmission timings of sequences, and
transmitting means for transmitting the first shift sequence to the N-th shift sequence according to the timing information, wherein
the first base sequence to the N-th base sequence satisfy a first condition of:
a total across the first base sequence to the N-th base sequence of correlation values of autocorrelation is not 0 when a shift amount is 0, and
a total across the first base sequence to the N-th base sequence of correlation values of autocorrelation is 0 when a shift amount is different from 0 used in transmission,
a first communication apparatus among the at least two communication apparatuses stores a first base set as the base set and holds first timing information as the timing information,
a second communication apparatus among the at least two communication apparatuses stores a second base set as the base set and holds second timing information as the timing information,
the first base set and the second base set satisfy a second condition of:
a total of correlation values with same shift amount across the first base sequence to the N-th base sequence of periodic correlation between the n-th base sequence of the first base set and the n-th base sequence of the second base set is 0 for all shift amounts used in data transmission, and
the transmission timings of the first shift sequence to the N-th shift sequence indicated by the first timing information are same as the transmission timings of the first shift sequence to the N-th shift sequence indicated by the second timing information.
